# FASCICULE DE BREVET EUROPEEN

(11) **EP 4 513 091 B1**
(45) Date de publication et mention de la délivrance du brevet: **11.11.2026**
(21) Numéro de dépôt: 25150845.3
(22) Date de dépôt: 26.11.2021
(51) Int. Cl.: F23R 3/50, F23R 3/00, F23R 3/60, F23R 3/54

(54) **MODULE DE COMBUSTION POUR UNE TURBOMACHINE**
VERBRENNUNGSMODUL FÜR EINE TURBOMASCHINE
COMBUSTION MODULE FOR A TURBOMACHINE

(30) Priorité: 30.11.2020 FR 2012392
(43) Date de publication de la demande: 26.02.2025
(62) Numéro(s) de document de la (des) demande(s) initiale(s) en application de l'article 76 CBE: 21839600.0 / 4 251 925
(73) Titulaire: Safran Ceramics, 33185 Le Haillan (FR)
(72) Inventeur: MATEO, Julien André Roger, 77550 MOISSY-CRAMAYEL (FR)
(74) Mandataire: Gevers & Orès

(56) Documents cités:
- US-A1- 2006 032 235
- US-A1- 2010 139 283
- US-A1- 2016 047 549
- US-A1- 2018 238 232
- US-B1- 6 339 923
- DATABASE WPI Week 199718, Derwent World Patents Index; AN 1997-198105, XP002803754

## Description

### Domaine technique de l'invention

La présente invention concerne un module de combustion pour une turbomachine, et plus particulièrement, la configuration et le montage des parois en matériau composite à matrice céramique (CMC) d'une chambre de combustion du module de combustion.

### Arrière-plan technique

L'état de la technique comprend, notamment, les documents US-A1-2018/238232, JP-B2-3331826 et US-A1-2010/139283.

D'une manière générale, une turbomachine, en particulier d'un aéronef, comprend un générateur de gaz comportant notamment un ou plusieurs compresseurs, par exemple basse pression et haute pression, disposé(s) en amont d'un module de combustion.

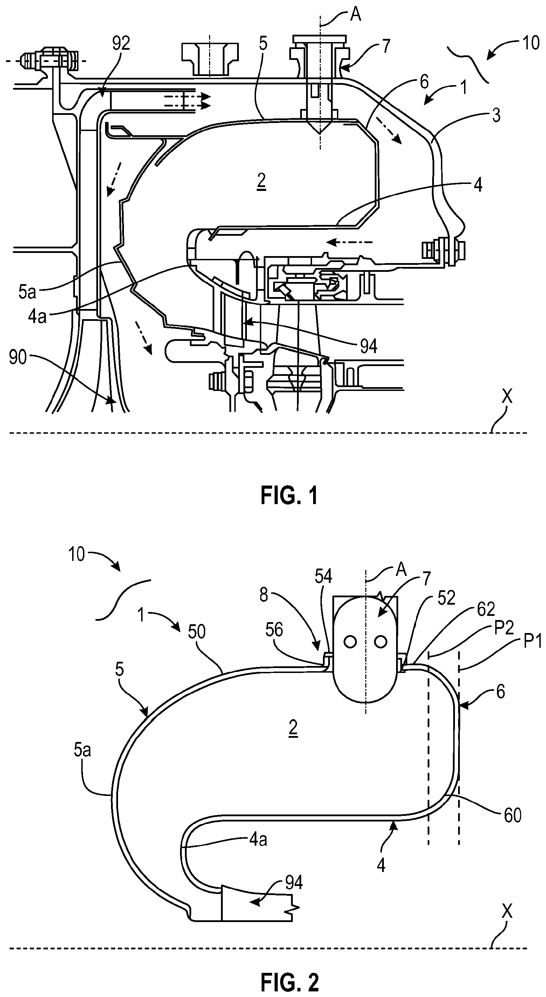

En référence à la figure 1, un module de combustion 1 de turbomachine 10, en particulier d'aéronef, présente un axe longitudinal X qui peut être confondu avec un axe longitudinal de la turbomachine 10. Le module 1 comprend une chambre de combustion 2 qui a une forme annulaire. Sur l'exemple, la chambre 2 s'étend autour de l'axe X et est entourée par un carter annulaire 3 qui s'étend également autour de l'axe X.

La chambre 2 est délimitée par des parois annulaires interne 4 et externe 5 coaxiales et réunies par un fond de chambre 6. La paroi externe 5 est fixée au carter 3 qui porte une rangée annulaire d'injecteurs de carburant 7 de manière à alimenter la chambre 2 avec du carburant. Sur l'exemple, chaque injecteur 7 passe par un axe A qui est perpendiculaire à l'axe X.

Une partie de l'air comprimé provenant d'un compresseur centrifuge 90 via un diffuseur annulaire 92 pénètre dans la chambre 2 et est mélangée au carburant apporté par les injecteurs 7. Une autre partie de cet air circule autour de la chambre et est illustrée par des flèches sur la figure 1. La combustion du mélange air/carburant est initiée dans la chambre 2 par un dispositif d'allumage (non illustré) et génère une combustion dans le fond de chambre 6.

La figure 1 illustre une chambre 2 à retour, dans laquelle le fond de chambre 6 est situé à l'aval. De plus, les parois annulaires interne et externe 4, 5 de la chambre 2 se prolongent radialement vers l'intérieur du module 1 (par rapport à l'axe X) par un retournement 4a, 5a pour amener les gaz de combustion de la chambre 2 vers un distributeur 94 de turbine. Le retournement 4a, 5a comprend un coude interne 4a relié à la paroi interne 4 et un coude externe 5a relié à la paroi externe 5.

On notera qu'une chambre de combustion directe, c'est-à-dire à flux normal, comprend un fond de chambre situé à l'amont et une sortie qui est située à l'aval et débouche dans le distributeur d'une turbine de la turbomachine.

La figure 1 illustre quant à elle une chambre de combustion à retour dans laquelle le fond de chambre est situé du côté aval et le retournement prévu à la sortie de la chambre permet de réorienter les gaz de combustion dans le distributeur de turbine.

Dans le cadre de la conception et de l'intégration d'un module de combustion, il est possible de séparer l'architecture de la chambre de combustion en plusieurs pièces pour notamment faciliter la fabrication et/ou l'opérabilité du module de combustion. Ceci peut engendrer des problèmes d'assemblage des différentes pièces fabriquées séparément dans un environnement thermiquement et mécaniquement extrêmement contraint.

La chambre de combustion est généralement réalisée dans un matériau métallique qui permet un assemblage des pièces fabriquées séparément par liaison mécanique (telle que des boulons), soudure ou brasage.

La chambre de combustion peut également être réalisée dans un matériau composite (tel qu'un composite à matrice céramique CMC) comportant des assemblages de pièces à la fois avec des liaisons dites « hybrides », à savoir une pièce en matériau métallique liée à une pièce en matériau composite pouvant supporter des dilatations différentielles, et des liaisons entre deux pièces en matériau composite.

L'utilisation de matériaux composites est particulièrement avantageuse dans le domaine des turbomachines car ces matériaux, relativement léger, ont une meilleure tenue à la température, ce qui permette d'économiser de l'air de refroidissement ou de fonctionner à plus haute température.

Dans le cadre d'une chambre de combustion réalisée en matériau CMC, un assemblage de pièces en matériau CMC est généralement réalisé par des fixations de type boulon. Cet assemblage par boulon est relativement encombrant et peut être complexe à mettre en place dans l'environnement du module de combustion qui présente des contraintes mécanique, thermomécanique et chimique. Par exemple, il est nécessaire notamment de s'assurer d'un serrage fiable en tous points de fonctionnement et de prévoir un dispositif anti-rotationnel du boulon. Ces difficultés d'assemblage des pièces en matériau CMC peuvent impacter de façon générale la performance ou l'intégrité de la chambre de combustion (et par conséquent de la turbomachine).

Dans ce contexte, il est utile de pallier au moins en partie aux inconvénients précités, en proposant une solution d'assemblage plus simple d'au moins deux pièces en matériau composite de type CMC dans un module de combustion d'une turbomachine.

### Résumé de l'invention

L'invention propose à cet effet un module de combustion pour une turbomachine, en particulier d'aéronef, comportant :
- un carter annulaire s'étendant autour d'un axe longitudinal X,
- une chambre annulaire de combustion située à l'intérieur du carter et comportant des parois annulaires coaxiales, respectivement, interne et externe, reliées entre elles par un fond de chambre annulaire, lesdites parois et ledit fond de chambre étant formés par au moins deux enveloppes annulaires qui sont réalisées en matériau composite à matrice céramique et qui comprennent des bords annulaires emboîtés l'un dans l'autre et en appui axial l'un sur l'autre.

Selon l'invention, le module de combustion comprend en outre des dispositifs anti-déboitement configurés pour maintenir les bords annulaires en appui axial l'un sur l'autre, ces dispositifs étant portés par le carter.

Selon l'invention, les dispositifs anti-déboitement sont des organes de butée qui sont formés en saillie sur le carter de la turbine et qui comprennent des extrémités libres configurées pour venir en butée sur la chambre de combustion, et en particulier sur le fond de chambre.

Les dispositifs anti-déboitement selon l'invention présentent plusieurs avantages. En particulier, ils permettent de positionner et d'assembler de manière simple et efficace les enveloppes en matériau CMC (formant les parois annulaires et le fond de chambre) entre elles, tout en empêchant leur désolidarisation en fonctionnement.

Dans une phase de fonctionnement à chaud du module de combustion (par exemple supérieur à 1000°C), il existe un écart de pression entre l'extérieur et l'intérieur de la chambre de combustion qui maintient en contact les deux éléments assemblés (à savoir les enveloppes en matériau CMC).

Un dispositif anti-déboitement interdit le démontage de la liaison dans les cas où l'écart de pression ne suffit pas à maintenir les éléments en contact, comme par exemple lorsque la turbine est à l'arrêt.

Ce type de liaison est peu encombrant et ne nécessite pas ou peu d'adaptation dans le module de combustion.

De manière générale, l'utilisation de l'écart de pression pour maintenir les éléments en contact et complétée d'un dispositif anti-déboitement est une solution alternative aux liaisons rigides telles que les boulons et aux liaisons indémontables telles que les soudures ou brasures

La chambre selon l'invention peut comprendre une ou plusieurs des caractéristiques suivantes, prises isolément les unes des autres ou en combinaison les unes avec les autres :
- le module comprend une première enveloppe définissant la paroi interne et le fond de chambre, et une seconde enveloppe définissant la paroi externe, lesdits bords étant situés à la jonction de la paroi externe au fond de chambre;
   -- le bord annulaire de la première enveloppe comprend une forme festonnée ;
- le module comprend en outre des injecteurs de carburant portés par le carter et engagés dans des orifices de l'une des enveloppes, lesdits dispositifs anti-déboitement étant formés par des rondelles qui sont montées autour des injecteurs et serrées radialement contre cette enveloppe, et qui comprennent des pattes configurées pour coopérer par appui et/ou accrochage avec l'autre des enveloppes ;
- chacune des rondelles est intercalée entre l'enveloppe et un écrou de serrage de la rondelle contre l'enveloppe ;
   -- chacune des rondelles présente un coefficient de dilatation thermique qui est donc apte à compenser l'écart de dilatation entre l'écrou de serrage et l'enveloppe en CMC ;
- l'écrou est vissé sur un fut d'une douille tubulaire montée autour de l'injecteur, cette douille comportant une collerette annulaire d'appui sur un bord périphérique de l'orifice dans lequel est engagé l'injecteur ;
- chacune des rondelles comprend deux pattes, orientées de préférence dans des directions sensiblement parallèles ;
- les pattes ont chacune une forme complémentaire de celle du bord de l'autre enveloppe, et/ou ont chacune une forme de crochet pour être engagé dans une lumière de cette autre enveloppe, de façon à interdire le déplacement relatif des deux éléments dans le sens axial ;
- chacun desdits organes se présentent sous la forme d'un bras de forme allongée et qui peut être incliné par rapport à l'axe moteur, l'extrémité libre de ce bras comprenant une surface d'appui sur la chambre de combustion qui s'étend dans un plan sensiblement perpendiculaire à la surface du fond de chambre ;
- lesdits organes de butée sont au nombre de trois à huit répartis circonférentiellement autour de l'axe X ;
- le module comprend un jeu entre chacun desdits organes de butée (en particulier l'extrémité libre des bras) et la chambre de combustion, par exemple ledit jeu est de l'ordre du millimètre ;
- lesdits organes de butée sont réalisés dans un matériau en composite, métallique ou alliage métallique ;
- lesdits organes de butée et le carter sont monoblocs ;
- la chambre de combustion est à flux inversé ;
- le carter porte une rangée annulaire d'injecteurs de carburant répartis angulairement autour de l'axe X ;
- chacun des injecteurs s'étend suivant un axe A perpendiculaire à l'axe X ;
- les première et seconde enveloppes se prolongent en amont par un retournement qui s'étend radialement vers l'intérieur du module ;
   -- chacun desdits organes de butée est configuré pour être monté avec un jeu ou avec une précontrainte ;
   -- l'extrémité libre desdits organes de butée est réalisée dans un matériau différent du matériau de réalisation des organes de butée pour assurer par exemple une compatibilité chimique ou thermique.

Avantageusement, les dispositifs anti-déboitement peuvent être formés à la fois par des rondelles et des organes de butée, tels que décrits selon au moins une des particularités de l'invention.

L'invention concerne également une turbomachine, en particulier d'aéronef, comprenant un module de combustion tel que précédemment décrit.

L'invention concerne également un aéronef comportant un fuselage et propulsé par au moins une turbomachine comprenant un module de combustion tel que précédemment décrit.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une demi vue schématique en coupe axiale d'un module de combustion d'une turbomachine comportant une chambre de combustion à retour selon l'art antérieur ;
[Fig.2] la figure 2 est une demi vue schématique partielle en coupe axiale d'un premier mode de réalisation d'un assemblage de module de combustion;
[Fig.3] la figure 3 est une vue schématique en perspective du dispositif anti-déboitement de la figure 2 ;
[Fig.4] la figure 4 est vue schématique en coupe selon un plan C-C de la figure 3 ;
[Fig.5] la figure 5 est une vue schématique en coupe selon un plan D-D de la figure 3 ;
[Fig.6] la figure 6 est une vue schématique en perspective d'un dispositif anti-déboitement selon un second mode de réalisation ;
[Fig.7] la figure 7 est une vue schématique partielle en coupe axiale d'un dispositif anti-déboitement selon un troisième mode de réalisation de l'invention ; réalisation ; et
[Fig.8] la figure 8 est une demi vue schématique en coupe axiale d'un mode de réalisation d'un dispositif anti-déboitement équipant un module de combustion selon l'invention.

### Description détaillée de l'invention

Par convention, dans la description ci-après, les termes « longitudinal » et « axial » qualifient l'orientation d'éléments structurels s'étendant selon la direction d'un axe longitudinal, tel qu'un axe longitudinal d'un module de combustion. Les termes « radial » ou « vertical » qualifient une orientation d'éléments structurels s'étendant selon une direction perpendiculaire à l'axe longitudinal. Les termes « intérieur » et « extérieur », et « interne » et « externe » sont utilisés en référence à un positionnement par rapport à l'axe longitudinal. Ainsi, un élément structurel s'étendant selon l'axe longitudinal comporte une face intérieure tournée vers l'axe longitudinal et une surface extérieure, opposée à sa surface intérieure. Les termes « amont » et « aval » sont définis par rapport au sens de circulation des gaz dans une turbomachine.

La figure 1 a été décrite dans ce qui précède et illustre un module de combustion 1 d'une turbomachine 10 selon l'art antérieur.

Les figures 2 à 8 représentent plusieurs modes de réalisation d'un module de combustion 1.

Dans la description qui suit, l'invention s'applique de manière générale à une turbomachine 10, en particulier d'aéronef, telle qu'un turboréacteur ou un turbopropulseur.

La turbomachine 10 comprend typiquement un module de compresseur comportant au moins un compresseur, un module de turbine comportant au moins une turbine et le module de combustion 1 intercalé entre les modules de compression et de turbine.

Tel que décrit dans ce qui précède, le module de combustion 1 comprend un carter annulaire 3 s'étendant autour d'un axe longitudinal X et entourant une chambre annulaire de combustion 2. Cet axe X peut être confondu avec un axe longitudinal, tel qu'un axe de rotation d'un rotor, de la turbomachine 10.

La chambre 2 et le carter 3 s'étendent autour de l'axe X. La chambre 2 peut s'étendre parallèlement ou de manière inclinée par rapport à l'axe X.

La figure 2 illustre schématiquement la chambre 2 comportant une paroi annulaire interne 4 et une paroi annulaire externe 5. Ces parois 4, 5 sont coaxiales et reliées entre elles par un fond de chambre annulaire 6. Cette chambre 2 est à flux inversé. Ainsi, le fond de chambre 6 est agencé du côté aval de la turbomachine et la chambre 2 débouche du côté amont de la turbomachine en direction du module de turbine. En variante, lorsque la chambre est directe, le fond de chambre 6 est agencé du côté amont de la turbomachine. Le fond de chambre 6 peut comprendre une paroi annulaire transversale passant sensiblement par un premier plan P1 qui est perpendiculaire à l'axe X.

La paroi externe 5 est fixée au carter 3 qui porte une rangée annulaire d'injecteurs de carburant 7 répartis angulairement autour de l'axe X de manière à alimenter la chambre 2 en carburant. En particulier, la paroi externe 5 comprend une rangée annulaire d'orifices 54 s'étendant autour de l'axe X. Chacun des orifices 54 présente un diamètre interne D₅₄. Chacun des orifices 54 comprend un bord périphérique 56. Chacun des orifices 54 est apte à recevoir un injecteur de carburant 7. Sur l'exemple de la figure 2, l'injecteur 7 passe par un axe A qui est sensiblement perpendiculaire à l'axe X. En variante, les orifices 54 et les injecteurs 7 pourraient être inclinés ou parallèles à l'axe X.

Dans le cadre de l'invention, la chambre 2 est réalisée en matériau composite à matrice céramique CMC. Les parois interne et externe 4, 5 et le fond de chambre 6 sont formés par au moins deux enveloppes annulaires 50, 60 en matériau composite à matrice céramique CMC.

Sur l'exemple de la figure 2, la paroi annulaire interne 4 et le fond de chambre 6 sont formés en une seule pièce par une première enveloppe 60. Sur l'exemple, la première enveloppe 60 présente une forme générale de « S » inversée, dans laquelle une des deux boucles correspond sensiblement au fond de chambre et l'autre des boucles correspond sensiblement à la paroi interne 4 et le coude interne 4a de la chambre. La paroi annulaire externe 5 est formée en une seule pièce par une seconde enveloppe 50. Sur l'exemple, la seconde enveloppe 50 présente une forme générale en « C », dans laquelle une partie supérieure correspond sensiblement à la paroi externe 5 et une partie inférieure correspondant sensiblement au coude externe 5a.

Sur l'exemple, les première et seconde enveloppes 50, 60 sont reliées entre elles du côté aval. Ces enveloppes 50, 60 se prolongent du côté amont par un retournement 4a, 5a qui s'étend radialement vers l'intérieur (par rapport à l'axe X) du module 1, pour déboucher dans un distributeur 94 du module de turbine.

Les première et seconde enveloppes 50, 60 comprennent chacune, respectivement, un bord 62 annulaire dit interne, et un bord 52 annulaire dit externe. Les bords annulaires 52, 62 s'emboîtent l'un dans l'autre, en particulier au niveau de la liaison entre la paroi externe 5 et le fond de chambre 6. En particulier, le bord interne 62 s'appuie radialement (ou sensiblement radialement) sur le bord externe 52. On entend par « appui radial », une force d'appui exercée par le bord interne 62 suivant un plan transversal (par rapport à l'axe X) sur une surface cylindrique du bord externe 52. On entend par « appui sensiblement radial », une force d'appui exercée par le bord interne 62 suivant un plan incliné (par rapport à l'axe X) sur une surface tronconique du bord externe 52, notamment lorsque la chambre 2 est inclinée par rapport à l'axe X.

Par ailleurs, le bord 62 de la première enveloppe 60 (correspondant au fond de chambre 6 sur l'exemple) peut comprendre une forme festonnée (non illustrée sur les figures), en particulier à proximité des injecteurs 7. Ceci permet notamment de compacter axialement la chambre 2. La forme festonnée peut être réalisée par une suite de segments d'arcs saillants ou rentrants, tels que des ondulations.

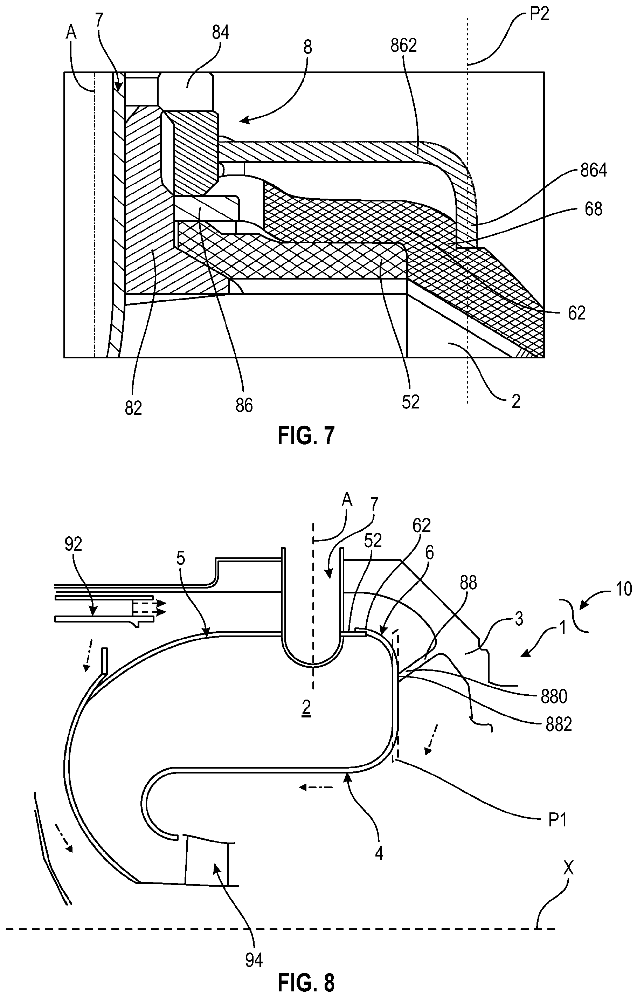

L'une des particularités de l'invention réside dans le fait que le module de combustion 1 comprend des dispositifs anti-déboitement 8 portés par la chambre 2 (illustrés sur les figures 2 à 7) ou portés par le carter 3 du module 1 (illustrés sur la figure 8). Chacun des dispositifs 8 est utilisé pour maintenir les bords annulaires 52, 62 en appui axial (ou sensiblement axial) l'un sur l'autre, ou avec un jeu limité. De cette façon, on empêche une désolidarisation des enveloppes 50, 60 de la chambre 2 en fonctionnement et à l'arrêt (et par conséquent de liaison entre la paroi externe 5 et le fond de chambre 6), tout en permettant un assemblage et un désassemblage simples et efficaces des dispositifs 8 dans l'encombrement disponible du module de combustion 1.

On entend par « appui axial », une force d'appui ou un contact exercé par le bord externe 52 suivant l'axe X sur une surface cylindrique du bord interne 62. On entend par « appui sensiblement axial », une force d'appui ou un contact exercé par le bord externe 52 suivant un plan incliné (par rapport à l'axe X) sur une surface tronconique du bord interne 62, notamment lorsque la chambre 2 est inclinée par rapport à l'axe X ; ou inversement, une force d'appui exercée par le bord interne 62 suivant un plan incliné (par rapport à l'axe X) sur une surface tronconique du bord externe 52.

Selon un premier mode de réalisation, illustré sur les figures 2 à 5, les dispositifs anti-déboitement 8 peuvent être installés sur la chambre 2. En particulier, sur ces exemples de figures, les dispositifs 8 sont montés autour des injecteurs de carburant 7.

Les dispositifs 8 sont formés chacun d'une rondelle 86 qui est configurée pour être rapportée autour de l'injecteur 7.

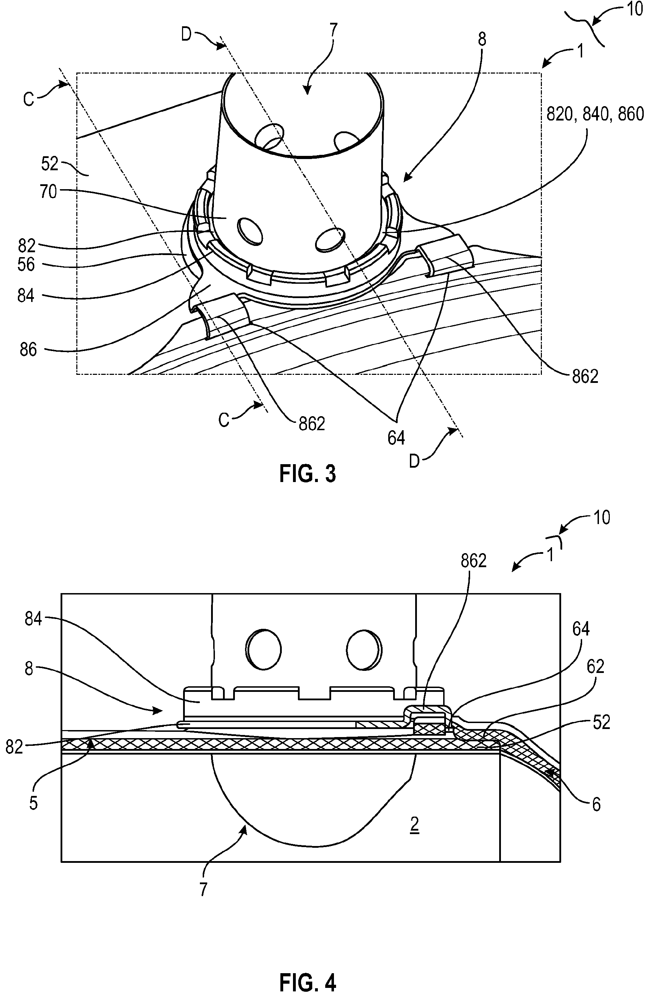

En référence à la figure 3, la rondelle 86 présente donc une forme générale annulaire et plane. Cette rondelle 86 comprend une première ouverture centrale 860 et des pattes 862. L'ouverture 860 présente un diamètre interne D₈₆₀.

La rondelle 86 peut comprendre une ou plusieurs pattes 862. Le nombre et les dimensions (forme, longueur, épaisseur, etc.) des pattes 862 par rondelle 86 peuvent varier en fonction des dimensions et des matériaux des pièces composant le module de combustion 1. Sur l'exemple de la figure 3, la rondelle 86 comprend deux pattes 862 qui sont orientées parallèlement entre elles. Ces pattes 862 présentent chacune une forme de crochet.

L'épaisseur de chaque rondelle 86 peut déterminer leur degré de participation au maintien des efforts de serrage, notamment durant les phases de vol de la turbomachine.

La rondelle 86 peut être réalisée dans un matériau en composite de type CMC ou dans un alliage métallique. De préférence, la rondelle 86 est réalisée en acier inoxydable, par exemple de type A286. L'acier inoxydable A286 présente comme avantages d'être compatible à l'environnement thermique de la chambre de combustion 2, et d'avoir un coefficient de dilatation thermique élevé pour notamment maintenir de façon optimiser les liaisons entre pièces dans des températures de fonctionnement extrêmes du module de combustion 1.

La rondelle 86 est configurée pour être serrée radialement (c'est-à-dire sensiblement perpendiculairement à l'axe X) contre la seconde enveloppe 50 de la paroi externe 5 par un écrou de serrage 84 et une douille 82.

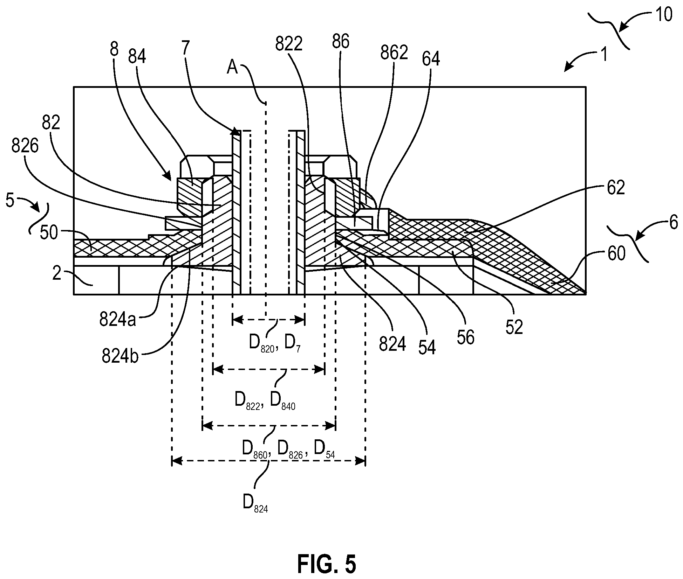

En référence à la figure 5, la douille 82 présente une forme tubulaire et comporte donc une seconde ouverture centrale 820 et un fut 822. La seconde ouverture 820 présente un diamètre interne D₈₂₀. Le fut 822 peut comprendre un filetage externe.

La douille 82 comprend également une collerette annulaire 824. La collerette 824 et le fut 822 peuvent être délimités par une partie tubulaire 826. Sur l'exemple de la figure 5, la collerette annulaire 824 comprend un premier flanc 824a qui présente une forme plane et un second flanc 824b qui présente une forme tronconique. Le second flanc 824b se rétrécit en direction de la partie tubulaire 826.

En fonctionnement à chaud, la forme tronconique du second flanc 824b de la collerette annulaire 824 de la douille 82 peut se dilater. Ce qui peut entraîner un déplacement par rapport à l'enveloppe 50. Cette forme tronconique du second flanc 824b peut renvoyer un déplacement radial relatif à un déplacement axial, conduisant à un resserrement de la liaison entre la douille 82, l'écrou 84 et l'enveloppe 50. La rondelle 86 peut être réalisée dans un matériau ayant un coefficient de dilatation thermique permettant de compenser un écart de dilatation entre l'enveloppe 50 et l'écrou 84.

Par ailleurs, sur l'exemple de la figure 5, la collerette 824 présente un diamètre externe D₈₂₄ qui est supérieur aux diamètres externes D₈₂₆, D₈₂₂ de la partie tubulaire 826 et du fut 822. Le diamètre externe D₈₂₆ de la partie tubulaire 826 est supérieur au diamètre externe D₈₂₂ du fut 822.

On décrit maintenant l'assemblage de la rondelle 86 du premier mode de réalisation sur la chambre 2, notamment autour des injecteurs 7 et sur les bords 52, 62 des enveloppes 50, 60, en référence aux figures 3 à 5.

Pour cela, la douille 82 est montée autour de l'injecteur 7, notamment à travers la seconde ouverture 820. Cette seconde ouverture 820 s'étend donc autour de l'axe A de l'injecteur 7. Sur l'exemple de la figure 5, le diamètre interne D₈₂₀ de la seconde ouverture 820 de la douille est donc sensiblement similaire au diamètre externe D₇ de l'injecteur 7.

Ensuite, le bord annulaire 52 de la seconde enveloppe 50 comprend les orifices 54 dans lesquels les injecteurs 7 sont destinés à être engagés. Le bord 52 est monté autour de la collerette 824 de la douille 82, notamment à travers les orifices 54. Ceci permet au bord périphérique 56 de l'orifice 54 d'être en appui sur le second flanc 824b de la collerette 824. Sur l'exemple de la figure 5, le bord périphérique 56 s'appuie sur le second flanc 824b suivant une position inclinée par rapport aux axes X et A. Par ailleurs, le diamètre externe D₈₂₆ de la partie tubulaire 826 de la douille 82 est sensiblement similaire au diamètre interne D₅₄ de l'orifice 54 de la seconde enveloppe 50.

Puis, la rondelle 86 est montée autour de la douille 82, notamment à travers la première ouverture 860. Cette première ouverture 860 s'étend également autour de l'axe A. Sur l'exemple de la figure 5, le diamètre interne D₈₆₀ de la première ouverture 860 de la rondelle est donc sensiblement similaire au diamètre externe D₈₂₆ de la partie tubulaire 826 de la douille et au diamètre interne D₅₄ de l'orifice 54 de la seconde enveloppe 50. Par ailleurs, le bord annulaire 62 de la première enveloppe 60 comprend dans l'exemple des lumières 64 de forme complémentaire aux pattes 862 de la rondelle 86. Ceci permet aux pattes 862 en forme de crochet de s'engager dans les lumières 64 de la première enveloppe 60, tel qu'illustré sur la figure 4.

Enfin, l'écrou 84 est vissé autour du fut 822 de la douille 82, notamment à travers une troisième ouverture 840 de l'écrou 84. Ceci permet d'assurer le maintien de la rondelle 86 et du bord 52 de la seconde enveloppe 50 sur la douille 82. Sur l'exemple de la figure 5, la troisième ouverture 840 présente un diamètre interne D₈₄₀ sensiblement similaire au diamètre externe D₈₂₂ du fut 822 de la douille 82. Cette troisième ouverture 840 peut comprendre un taraudage interne complémentaire au filetage externe du fût 822 de la douille 82.

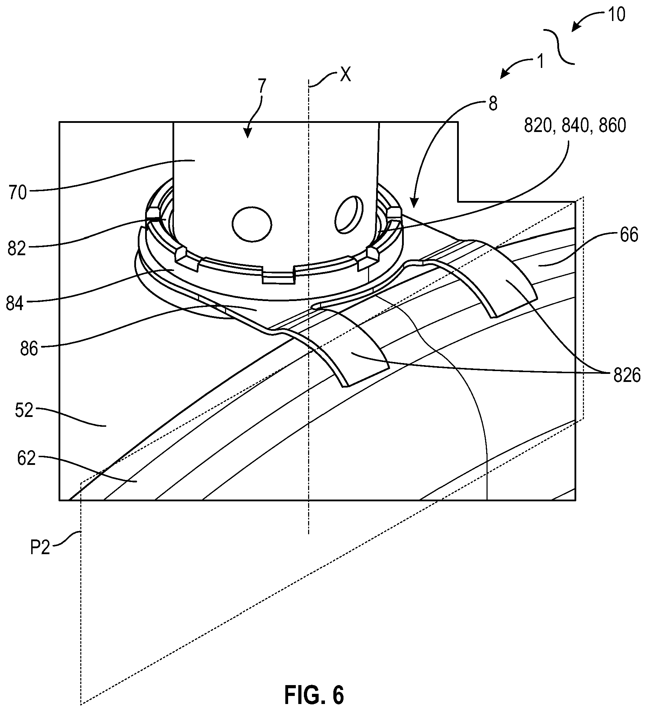

La figure 6 illustre un des dispositifs anti-déboitement 8 et son assemblage selon un second mode de réalisation, dans lequel les dispositifs anti-déboitement 8 peuvent également être installés sur la chambre 2.

Les dispositifs anti-déboitement 8 du second mode de réalisation, se distinguent des dispositifs 8 du premier mode de réalisation par les pattes 862 de la rondelle 86 et le bord 62 de la première enveloppe 60.

En référence à la figure 6, les pattes 862 de la rondelle 86 présentent une forme allongée et courbée. Le bord 62 de la première enveloppe 60 comprend un bossage 66 passant sensiblement par un second plan P2. Ce plan P2 est sensiblement perpendiculaire à l'axe X du module 1 et situé en amont du premier plan P1 du fond de chambre 6. En variante, le bord 62 peut comprendre une surépaisseur de l'enveloppe 60 au niveau du plan P2. Sur la figure 6, les pattes 862 et le bossage 66 ont une forme complémentaire. Ceci permet aux pattes 862 de se fixer au bossage 66 par appui direct, de façon à ce que les pattes 862 serrées radialement contre le bord 52 soient en butée sur le bossage 66 du bord 62. Cette configuration permet également donc de maintenir les bords 52, 62 des enveloppes 50, 60 en appui axial l'un sur l'autre.

De préférence, les pattes 862 sont allongées pour que leurs extrémités libres et courbées soient face au plan P1 correspondant sensiblement à la paroi transversale du fond de chambre 6. Ceci permet notamment de compenser un déplacement axial de l'assemblage des bords 52, 62 pendant le fonctionnement du module de combustion 1.

Par ailleurs, la forme allongée des pattes 862 permet d'apporter de la souplesse à la liaison entre les pattes 862 et le bossage 66. De cette façon, l'assemblage entre les enveloppes 50, 60 (des parois 5, 6 et du fond de chambre 6), est rigide notamment avec contact permanent entre les pattes 862 et le bossage 66, et avec peu ou sans jeu de montage entre les bords 52, 62 des enveloppes 50, 60.

Ce second mode de réalisation présente l'avantage notamment d'éviter de réaliser des usinages complexes sur le bord 62 de la première enveloppe 60.

La figure 7 illustre un des dispositifs anti-déboitement 8 et son assemblage selon un troisième mode de réalisation, dans lequel ces dispositifs 8 peuvent également être installés sur la chambre 2.

Les dispositifs anti-déboitement 8 du troisième mode de réalisation se distinguent des dispositifs 8 du premier mode de réalisation, par les pattes 862 de la rondelle 86 et le bord 62 de la première enveloppe 60.

En référence à la figure 7, le bord 62 de la première enveloppe 60 comprend au moins un épaulement 68, de façon à former une surface d'appui axial pour une des pattes 862 de la rondelle 86. De préférence, l'épaulement 68 est réalisé sur une surépaisseur de l'enveloppe 60 située sensiblement au niveau du plan P2. Les pattes 862 et les épaulements 68 peuvent avoir une forme complémentaire.

Sur la figure 7, la patte 862 comprend une extrémité libre courbée 864 s'engageant dans l'épaulement 68 du bord 62. De cette façon, les pattes 862 se fixent dans les épaulements 68 également par appui axial direct. Ainsi, cette configuration permet aussi le maintien des bords 52, 62 l'un sur l'autre. Ce troisième mode de réalisation est une solution alternative simple à réaliser et à mettre en œuvre pour empêcher la liaison des enveloppes 50, 60 de se désolidariser.

Selon un mode de réalisation de l'invention, illustré sur la figure 8 les dispositifs anti-déboitement 8 peuvent être portés sur le carter 3. En particulier, sur cet exemple de la figure 8, les dispositifs 8 et le carter 3 sont monoblocs (c'est-à-dire venue de matière).

Avantageusement, ces dispositifs 8 sont des organes de butée formés en saillie sur le carter 3. Ces organes de butée peuvent comprendre des extrémités libres 880 aptes à venir en butée sur la chambre 2, en particulier sur le fond de chambre 6. Cette configuration permet d'empêcher tout déplacement du fond de chambre 6 par rapport à la paroi externe 5.

Ces organes de butée peuvent être réalisés dans un matériau rigide ou souple. Par exemple, les organes de butée sont réalisés dans un matériau en composite, métallique, ou alliage métallique.

De préférence, les organes de butée peuvent être réalisés dans le même matériau que le carter 3 mais avec une première épaisseur réduite par rapport à une seconde épaisseur du carter 3. Ceci permet notamment de rendre les organes de butée souples, tout en étant apte à exercer un appui suffisant sur la chambre 2 pour maintenir les bords 52, 62 en appui axial l'un sur l'autre.

Dans le cas des organes de butée réalisés en matériau souple, les extrémités libres 880 peuvent venir en contact direct sur le fond de chambre 6. Dans le cas des organes de butée réalisés en matériau rigide ou souple, un jeu de montage et/ou un jeu de compensation des dilatations en fonctionnement peuvent être ajoutés entre les organes de butée et le fond de chambre. Ces jeux de montage et de dilatation peuvent varier en fonction des matériaux ou des dimensions (telles que l'épaisseur) utilisés pour les enveloppes et les organes de butée. A titre d'exemple, ce jeu de montage et/ou jeu de compensation des dilatations est de l'ordre du millimètre.

Les organes de butée et le carter 3 peuvent être réalisés en monobloc (c'est-à-dire venue de matière).

Sur la figure 8, les organes de butée se présentent sous la forme de bras 88. Le bras 88 présente une forme allongée en direction du fond de chambre 6. L'extrémité 880 du bras 88 peut être inclinée par rapport à l'axe X. Cette extrémité 880 comprend une surface d'appui 882 sur le fond de chambre 6. Sur l'exemple de la figure 8, la surface d'appui 882 passe sensiblement par le premier plan P1.

Le carter 3 peut comprendre entre trois et huit bras 88 répartis circonférentiellement autour de l'axe X, de façon à ce qu'un flux d'air en provenance d'un diffuseur 92 du module de compresseur puisse circuler dans le module 1.

De plus, les extrémités libres 880 des bras 88 peuvent comprendre un revêtement de protection thermique. Ceci permet notamment d'abaisser la température des bras 88. Ce revêtement peut être associé à un matériau différent du matériau de réalisation des organes de butée. Ceci permet de favoriser une compatibilité chimique ou thermique entre les organes de butée et la chambre.

Ce mode de réalisation des dispositifs 8 présente l'avantage notamment de favoriser l'hyperstatisme (c'est-à-dire de rendre immobile) des bords 52, 62 emboîtés l'un sur l'autre, et ainsi limiter les mouvements et/ou déformations.

Selon un autre mode de réalisation (non illustré sur les figures), les organes de butée du mode de réalisation de la figure 8 peut être combiné avec les rondelles d'au moins un des modes de réalisation des figures 2 à 7. En effet, les dispositifs 8 peuvent être formés à la fois par des rondelles 86 et des organes de butée.

Les dispositifs anti-déboitement équipant le module de combustion de la présente invention sont avantageux notamment pour les raisons suivantes :
- ils renforcent l'assemblage entre les pièces réalisées en matériau composite de type CMC dans un module de combustion,
- ils suppriment la désolidarisation de pièces assemblées dans le module de combustion en fonctionnement,
- ils proposent un assemblage et un désassemblage amovible du dispositif anti-déboitement sur la chambre,
- ils proposent une alternative à l'utilisation de fixation type boulon,
- ils limitent le coût de maintenance de la chambre de combustion, et
- ils s'adaptent facilement aux turbomachines existantes.

De manière générale, les solutions proposées sont simples, efficaces et économiques à réaliser et à assembler sur une turbomachine et un aéronef, tout en assurant l'assemblage et le désassemblage sécurisés de la chambre de combustion (réalisée par des pièces en matériau composite) dans une turbomachine.

## Revendications

1. Module de combustion (1) pour une turbomachine, en particulier d'aéronef (10), comportant :
- un carter annulaire (3) s'étendant autour d'un axe longitudinal (X),
- une chambre annulaire de combustion (2) située à l'intérieur du carter (3) et comportant des parois annulaires coaxiales, respectivement, interne (4) et externe (5), reliées entre elles par un fond de chambre annulaire (6), lesdites parois (4, 5) et ledit fond de chambre (6) étant formés par au moins deux enveloppes annulaires (50, 60) qui sont réalisées en matériau composite à matrice céramique et qui comprennent des bords annulaires (52, 62) emboîtés l'un dans l'autre et en appui axial l'un sur l'autre,
**caractérisé en ce que** le module (1) comprend en outre des dispositifs anti-déboitement (8) configurés pour maintenir les bords annulaires (52, 62) en appui axial l'un sur l'autre, ces dispositifs (8) étant portés par le carter (3),
et **en ce que** les dispositifs anti-déboitement (8) sont des organes de butée qui sont formés en saillie sur le carter (3) et qui comprennent des extrémités libres (880) configurées pour venir en butée sur la chambre de combustion (2), et en particulier sur le fond de chambre (6).

2. Module de combustion selon la revendication 1, **caractérisé en ce qu'**il comprend une première enveloppe (60) définissant la paroi interne (4) et le fond de chambre (6), et une seconde enveloppe (50) définissant la paroi externe (5), lesdits bords (52, 62) étant situés à la jonction de la paroi externe (5) au fond de chambre (6).

3. Module de combustion selon la revendication 1 ou 2, **caractérisé en ce que** chacun desdits organes se présente sous la forme d'un bras (88) de forme allongée et qui est inclinée par rapport à l'axe (X), l'extrémité libre (880) de ce bras (88) comprenant une surface d'appui (882) sur la chambre de combustion (2) qui s'étend dans un plan (P1) sensiblement perpendiculaire à l'axe (X).

4. Module de combustion selon la revendication 3, **caractérisé en ce que** les bras (88) sont au nombre de trois à huit répartis circonférentiellement autour de l'axe (X).

5. Module de combustion selon l'une des revendications 1 à 4, **caractérisé en ce que** les organes de butée sont réalisés dans un même matériau de réalisation que le carter (3), dans lequel chacun des organes de butée présente une première épaisseur inférieure à une seconde épaisseur du carter (3).

6. Module de combustion selon l'une des revendications 1 à 5, **caractérisé en ce que** l'extrémité libre (880) des bras (88) est réalisée dans un matériau différent du matériau de réalisation desdits organes de butée.

7. Module de combustion selon l'une des revendications 1 à 6, **caractérisé en ce que** lesdits organes de butée sont réalisés dans un matériau en composite, métallique ou alliage métallique.

8. Module de combustion selon l'une des revendications 1 à 7, **caractérisé en ce que** lesdits organes de butée et le carter (3) sont monoblocs.

9. Module de combustion selon l'une des revendications 1 à 8, **caractérisé en ce que** la chambre de combustion (2) est à flux inversé.

10. Module de combustion selon l'une des revendications 1 à 9, **caractérisé en ce que** le bord annulaire (62) de la première enveloppe (60) comprend une forme festonnée.

11. Module de combustion selon l'une des revendications 1 à 10, **caractérisé en ce que** le carter (3) porte une rangée annulaire d'injecteurs de carburant (7) répartis angulairement autour de l'axe (X).

12. Module de combustion selon la revendication 11, **caractérisé en ce que** chacun des injecteurs (7) s'étend suivant un axe (A) perpendiculaire à l'axe (X).

13. Module selon l'une des revendications 1 à 12, **caractérisé en ce que** les première (60) et seconde (50) enveloppes se prolongent en amont par un retournement (4a, 5a) qui s'étend radialement vers l'intérieur du module (1).

14. Turbomachine (10), en particulier d'aéronef, comprenant un module (1) de combustion selon l'une des revendications précédente.

## Patentansprüche

1. Verbrennungsmodul (1) für eine Turbomaschine, insbesondere eines Luftfahrzeugs (10), umfassend:
- ein ringförmiges Gehäuse (3), das sich um eine Längsachse (X) erstreckt,
- eine ringförmige Brennkammer (2), die sich im Inneren des Gehäuses (3) befindet und koaxiale ringförmige Wände, eine innere (4) bzw. eine äußere (5), umfasst, die über einen ringförmigen Kammerboden (6) miteinander verbunden sind, wobei die Wände (4, 5) und der Kammerboden (6) durch mindestens zwei ringförmige Schalen (50, 60) gebildet sind, die aus einem Verbundmaterial mit Keramikmatrix hergestellt sind und die ringförmige Ränder (52, 62) umfassen, die ineinander verschachtelt sind und in axialer Auflage aufeinander aufliegen, **dadurch gekennzeichnet, dass** das Modul (1) weiter Entschachtelungsverhinderungsvorrichtungen (8) umfasst, die konfiguriert sind, um die ringförmigen Ränder (52, 62) axial aufeinander aufliegend zu halten, wobei diese Vorrichtungen (8) von dem Gehäuse (3) gestützt werden,
und dadurch, dass die Entschachtelungsverhinderungsvorrichtungen (8) Anschlagelemente sind, die am Gehäuse (3) vorstehen und die freie Enden (880) aufweisen, die konfiguriert sind, auf Anschlag auf die Brennkammer (2), und insbesondere auf dem Kammerboden (6), zu gelangen.

2. Verbrennungsmodul nach Anspruch 1, **dadurch gekennzeichnet, dass** es eine erste Schale (60), die die Innenwand (4) und den Kammerboden (6) definiert, und eine zweite Schale (50), die die Außenwand (5) definiert, umfasst, wobei sich die Ränder (52, 62) an der Verbindungsstelle der Außenwand (5) mit dem Kammerboden (6) befinden.

3. Verbrennungsmodul nach Anspruch 1 oder 2, **dadurch gekennzeichnet, dass** jedes der Elemente die Form eines langgestreckten Arms (88) aufweist und der in Bezug auf die Achse (X) geneigt ist, wobei das freie Ende (880) dieses Arms (88) eine Auflagefläche (882) an der Brennkammer (2) umfasst, die sich in einer Ebene (P1) erstreckt, welche im Wesentlichen senkrecht zu der Achse (X) verläuft.

4. Verbrennungsmodul nach Anspruch 3, **dadurch gekennzeichnet, dass** die Arme (88), die sich auf eine Anzahl von drei bis acht belaufen, in Umfangsrichtung um die Achse (X) herum verteilt sind.

5. Verbrennungsmodul nach einem der Ansprüche 1 bis 4, **dadurch gekennzeichnet, dass** die Anschlagelemente aus dem gleichen Material bestehen wie das Gehäuse (3), wobei jedes der Anschlagelemente eine erste Dicke aufweist, die geringer ist als eine zweite Dicke des Gehäuses (3).

6. Verbrennungsmodul nach einem der Ansprüche 1 bis 5, **dadurch gekennzeichnet, dass** das freie Ende (880) der Arme (88) aus einem anderen Material besteht als das Material, aus dem die Anschlagelemente gefertigt sind.

7. Verbrennungsmodul nach einem der Ansprüche 1 bis 6, **dadurch gekennzeichnet, dass** die Anschlagelemente aus einem Verbundmaterial, einem metallischen Material oder einer Metalllegierung gefertigt sind.

8. Verbrennungsmodul nach einem der Ansprüche 1 bis 7, **dadurch gekennzeichnet, dass** die Anschlagelemente und das Gehäuse (3) aus einem Stück bestehen.

9. Verbrennungsmodul nach einem der Ansprüche 1 bis 8, **dadurch gekennzeichnet, dass** die Brennkammer (2) mit umgekehrter Strömung ist.

10. Verbrennungsmodul nach einem der Ansprüche 1 bis 9, **dadurch gekennzeichnet, dass** der ringförmige Rand (62) der ersten Schale (60) eine festonierte Form umfasst.

11. Verbrennungsmodul nach einem der Ansprüche 1 bis 10, **dadurch gekennzeichnet, dass** das Gehäuse (3) eine ringförmige Reihe von Kraftstoffeinspritzern (7) trägt, die winkelmäßig um die Achse (X) verteilt sind.

12. Verbrennungsmodul nach Anspruch 11, **dadurch gekennzeichnet, dass** sich jeder der Einspritzer (7) entlang einer Achse (A) erstreckt, die senkrecht zu der Achse (X) steht.

13. Verbrennungsmodul nach einem der Ansprüche 1 bis 12, **dadurch gekennzeichnet, dass** sich die ersten (60) und die zweiten (50) Schalen stromaufwärts durch eine Umbiegung (4a, 5a) fortsetzen, die sich radial in das Innere des Moduls (1) erstreckt.

14. Turbomaschine (10), insbesondere eines Luftfahrzeugs, umfassend ein Verbrennungsmodul (1) nach einem der vorstehenden Ansprüche.

## Claims

1. Combustion module (1) for a turbomachine, in particular of an aircraft (10), comprising:
- an annular casing (3) extending around a longitudinal axis (X),
- an annular combustion chamber (2) located inside the casing (3) and comprising coaxial annular walls, internal (4) and external (5) respectively, connected to each other by an annular bottom chamber (6), said walls (4, 5) and said bottom chamber (6) being formed by at least two annular envelopes (50, 60) which are made of a ceramic matrix composite material and which comprise annular edges (52, 62) fitted together one inside the other and in axial abutment on each other,
**characterised in that** the module (1) further comprises anti-disengagement devices (8) configured to maintain the annular edges (52, 62) in axial abutment with each other, these devices (8) being carried by the casing (3),
an **in that** the anti-disengagement devices (8) are abutment members which are projectably formed on the casing (3) and which comprise free ends (880) configured to come in abutment on the combustion chamber (2), and in particular on the bottom chamber (6).

2. Combustion module according to claim 1, **characterised in that** it comprises a first envelope (60) defining the internal wall (4) and the bottom chamber (6), and a second envelope (50) defining the external wall (5), said edges (52, 62) being located at the junction of the external wall (5) to the bottom chamber (6).

3. Combustion module according to claim 1 or 2, wherein each of said members is in the form of an elongated arm (88) which can be inclined with respect to the engine axis (X), the free end (880) of this arm (88) comprising an abutment surface (882) on the combustion chamber (2) which extends in a plane (P1) substantially perpendicular to the axis (X).

4. The combustion module according to claim 3, **characterised in that** the arms (88) are three to eight in number, distributed circumferentially around the axis X.

5. The combustion module according to one of claims 1 to 4, **characterised in that** the abutment members are made of the same material as the casing (3), wherein each of the abutment members have a first thickness lower than a second thickness of the casing (3).

6. The combustion module according to one of claims 1 to 5, **characterised in that** the free end (880) of the arms (88) is made of a material different from the material of the abutment members.

7. The combustion module according to one of claims 1 to 6, **characterised in that** the abutment members are made of a composite, metal or metal alloy material.

8. The combustion module according to one of claims 1 to 7, **characterised in that** said abutment members and the casing (3) are monoblocs.

9. The combustion module according to one of claims 1 to 8, **characterised in that** the combustion chamber (2) is reverse flow.

10. The combustion module according to one of claims 1 to 9, **characterised in that** the annular edges (62) of the first envelope (60) comprises a scalloped shape.

11. The combustion module according to one of claims 1 to 10, **characterised in that** the casing (3) carries an annular row of fuel injectors (7) angularly distributed around the axis (X).

12. The combustion module according to claim 11, **characterised in that** each of the injectors (7) extends along an axis (A) perpendicular to the axis (X).

13. The combustion module according to one of claims 1 to 12, **characterised in that** the first (60) and second (50) envelopes are extended upstream by a turnaround (4a, 5a) that extends radially towards the interior of the module (1).

14. A turbomachine (10), in particular of an aircraft, comprising a combustion module (1) according to one of the preceding claims.
